# EUROPÄISCHE PATENTSCHRIFT

(11) **EP 0 687 492 B1**
(45) Veröffentlichungstag und Bekanntmachung des Hinweises auf die Patenterteilung: **27.08.1997**
(21) Anmeldenummer: 95106616.6
(22) Anmeldetag: 03.05.1995
(51) Int. Cl.: B01D 25/12, B01D 25/21

(54) **Membranfilterplatte für eine Filterpresse**
Membrane filter-plate for a filter press
Plaque filtrante à membrane pour une filtre-presse

(30) Priorität: 07.06.1994 DE 4419865
(43) Veröffentlichungstag der Anmeldung: 20.12.1995
(73) Patentinhaber: Lenser Kunststoff-Presswerk GmbH & Co. KG, D-89250 Senden (DE)
(72) Erfinder: Ruhland, Heinz, D-73312 Geislingen (DE)
(74) Vertreter: Dziewior, Joachim, Dipl.-Phys. Dr.

(56) Entgegenhaltungen:
- EP-A- 0 247 288
- WO-A-92/21423
- DE-A- 1 960 821
- DE-A- 4 119 166
- GB-A- 2 157 585
- US-A- 3 655 056

## Beschreibung

Die Erfindung betrifft eine Membranfilterplatte für eine Filterpresse, bei der mehrere solcher randseitig zusammengespannten, eine Stützwand mit einem umlaufenden Plattenrahmen aufweisenden Filterplatten zwischen sich Filterkammern mit darin mündenden Einläufen für die zu filtrierende Suspension bilden und ein- oder beidseitig eine mit der Filterplatte randseitig dicht verbundene, im übrigen durch ein Druckmittel in die Filterkammer vorbewegbare Membran tragen, die auf ihrer der jeweiligen Filterkammer zugekehrten Wandfläche mit einem Filtertuch belegte Profilvorsprünge aufweist, welche unter dem Filtertuch ein an einen Filtratauslauf angeschlossenes Rinnensystem für das Filtrat bilden, wobei die Membran zum lösbaren Anschluß an der Filterplatte mit einer im wesentlichen senkrecht zu ihrer Ebene vorstehenden Randleiste versehen ist, die in eine an der Filterplatte umfangsseitig angeordnete Aufnahmenut greift.

Eine derartige Membranfilterplatte ist beispielsweise aus der DE 41 18 620 bekannt, siehe aber auch die GB-A-2 157 585.

Um die Randleiste in der Aufnahmenut zu halten, ist dort ein zunächst lose aufgelegter Halterahmen vorgesehen, der somit seinerseits über entsprechende Befestigungsmittel gehalten werden muß.

Der Erfindung liegt die Aufgabe zugrunde, eine Membranfilterplatte der eingangs genannten Art so auszubilden, daß die Befestigung der Membran an der Membranfilterplatte auf einfachere und zuverlässigere Weise möglich ist.

Diese Aufgabe wird nach der Erfindung dadurch gelöst, daß die Randleiste eine geringere Breite als die Aufnahmenut aufweist und zwischen ihrer einen Seitenwand und der Nutwand einen Aufnahmespalt für eine Klemmleiste bildet, in den anschließend zur Befestigung der Randleiste in der Aufnahmenut die Klemmleiste eingeschoben ist.

Der durch die Erfindung erreichte Vorteil besteht im wesentlichen darin, daß zur Anbringung der Membran an der Membranfilterplatte die Randleiste zunächst leicht und ohne zu überwindende Klemmkräfte in die ihr gegenüber breitere Aufnahmenut eingelegt werden kann, und daß anschließend zur Befestigung der Randleiste in der Aufnahmenut lediglich eine Klemmleiste in den verbleibenden Aufnahmespalt eingeschoben werden muß.

Von besonderem Vorteil ist dabei im Rahmen der Erfindung, wenn die Aufnahmenut sich zu ihrem Nutboden hin verbreitert. Dann ist ein selbsttätiges Lösen der Randleiste aus der Aufnahmenut vollständig ausgeschlossen, solange die Klemmleiste in ihrem Aufnahmespalt sitzt. Hierbei ist es weiter von Vorteil, wenn der Aufnahmespalt planparallele Seitenwände aufweist.

Der Aufnahmespalt ist zweckmäßigerweise auf der dem Plattenrahmen zugewandten Seite der Aufnahmenut angeordnet, da auf dieser Seite der gebildete Aufnahmespalt frei zugänglich ist.

Um ein selbsttätiges Lösen der Klemmleiste aus der Aufnahmenut zu verhindern, weist die Klemmleiste vorteilhafterweise an ihrer der Nutwand anliegenden Seitenwand einen in eine Vertiefung in der Nutwand vorstehenden Rastvorsprung auf.

Zur Abdichtung der Membran gegenüber der Membranfilterplatte kann im Boden der Aufnahmenut eine Dichtungsnut zur Aufnahme eines Dichtmittels vorgesehen sein. Ebenso besteht jedoch auch die Möglichkeit, daß in der den Boden der Aufnahmenut anliegenden Fläche der Randleiste eine Dichtungsnut zur Aufnahme eines Dichtmittels vorgesehen ist.

Weiter besteht im Rahmen der Erfindung die vorteilhafte Möglichkeit, daß die Klemmleiste im Bereich der Filtratbohrungen unterbrochen ist, so daß dort der Filtratablauf ohne weiteres möglich ist, ohne daß dies die Befestigung der Membran an der Membranfilterplatte ungünstig beeinflußt.

Schließlich ist es günstig, wenn die Klemmleiste und die Randleiste bündig mit dem Plattenrahmen abschließen.

Im folgenden wird die Erfindung an einem in der Zeichnung dargestellten Ausführungsbeispiel näher erläutert; es zeigen:
- Fig. 1: eine nur teilweise Darstellung eines Querschnitts durch die Membranfilterplatte,
- Fig. 2: eine Draufsicht auf den Eckbereich der Membranfilterplatte,
- Fig. 3: einen Querschnitt längs der Linie III-III nach Fig. 2.

Die in der Zeichnung nur teilweise dargestellte Membranfilterplatte 1 ist für eine Filterpresse vorgesehen, bei der mehrere solcher Membranfilterplatten randseitig zusammengespannt sind.

Die Membranfilterplatte 1 weist eine Stützwand 2 mit einem umlaufenden Plattenrahmen 3 auf, wobei jeweils zwei Membranfilterplatten 1 zwischen sich Filterkammern 4 mit darin mündenden - in der Zeichnung nicht dargestellten - Einläufen für die zu filtrierende Suspension bilden. Die Membranfilterplatte 1 trägt beidseitig eine mit ihr randseitig dicht verbundene Membran 5, die durch ein Druckmittel in die - nur angedeutete - Filterkammer 4 vorbewegbar ist. Auf ihrer der jeweiligen Filterkammer 4 zugekehrten Wandfläche weist die Membran 5 Profilvorsprünge 6 auf, die durch ein in der Zeichnung nicht dargestelltes Filtertuch belegt werden. Unter dem Filtertuch bilden die Profilvorsprünge 6 ein an einen Filtratauslauf 7 angeschlossenes Rinnensystem für das Filtrat.

Die Membran 5 ist zum lösbaren Anschluß an der Membranfilterplatte 1 mit einer im wesentlichen senkrecht zu ihrer Ebene vorstehenden Randleiste 8 versehen, die in eine an der Filterplatte umfangsseitig angeordnete Aufnahmenut 9 greift.

Die Randleiste 8 selbst weist eine geringere Breite als die Aufnahmenut 9 auf, so daß zwischen ihrer einen Seitenwand 8.1 und der Nutwand 9.1 ein Aufnahmespalt 10 gebildet wird. In diesen Aufnahmespalt 10 ist eine Klemmleiste 11 eingeschoben.

Die Aufnahmenut 9 verbreitert sich zu ihrem Nutboden 9.2 hin, so daß bei eingeschobener Klemmleiste 11 ein selbsttätiges Lösen der Randleiste 8 aus der Aufnahmenut 9 ausgeschlossen ist. Die Randleiste 8 verbreitert sich zweckmäßigerweise im gleichen Maße wie die Aufnahmenut 9, so daß der Aufnahmespalt 10 zueinander planparallele Seitenwände besitzt. Die Klemmleiste 11 kann dadurch beispielsweise einfachen rechteckigen Querschnitt aufweisen. Der Aufnahmespalt 10 ist auf der dem Plattenrahmen 3 zugewandten Seite der Aufnahmenut 9 angeordnet, so daß er zum Einsetzen der Klemmleiste 11 frei zugänglich ist.

Die Klemmleiste 11 weist an ihrer der Nutwand 9.1 anliegenden Seitenwand einen in eine Vertiefung in der Nutwand 9.1 vorstehenden Rastvorsprung 12 auf, wodurch ein evtl. selbsttätiges Lösen der Klemmleiste 11 aus dem Aufnahmespalt 10 ausgeschlossen ist.

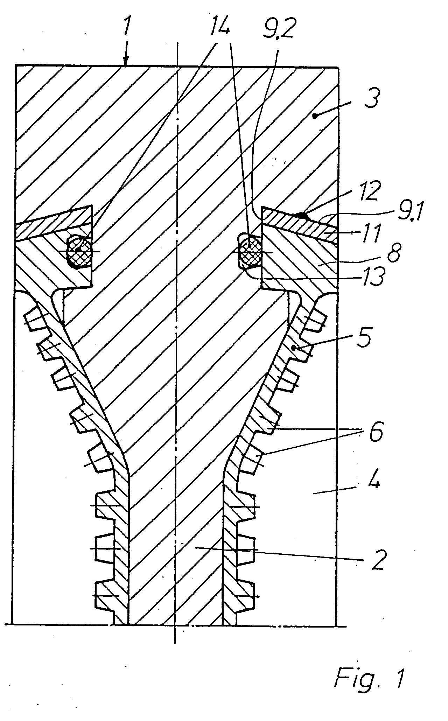

Zur Abdichtung der Membran 5 gegenüber der Membranfilterplatte 1 kann - wie dies in Fig. 1 in der rechten Zeichnungshälfte dargestellt ist - im Boden 9.2 der Aufnahmenut 9 eine Dichtungsnut 13 zur Aufnahme eines Dichtmittels 14 vorgesehen sein. Ebenso besteht jedoch auch die in der Fig. 1 in der linken Bildhälfte dargestellte Möglichkeit, daß in der dem Boden 9.2 der Aufnahmenut 9 anliegenden Fläche der Randleiste 8 eine solche Dichtungsnut 13 angeordnet ist.

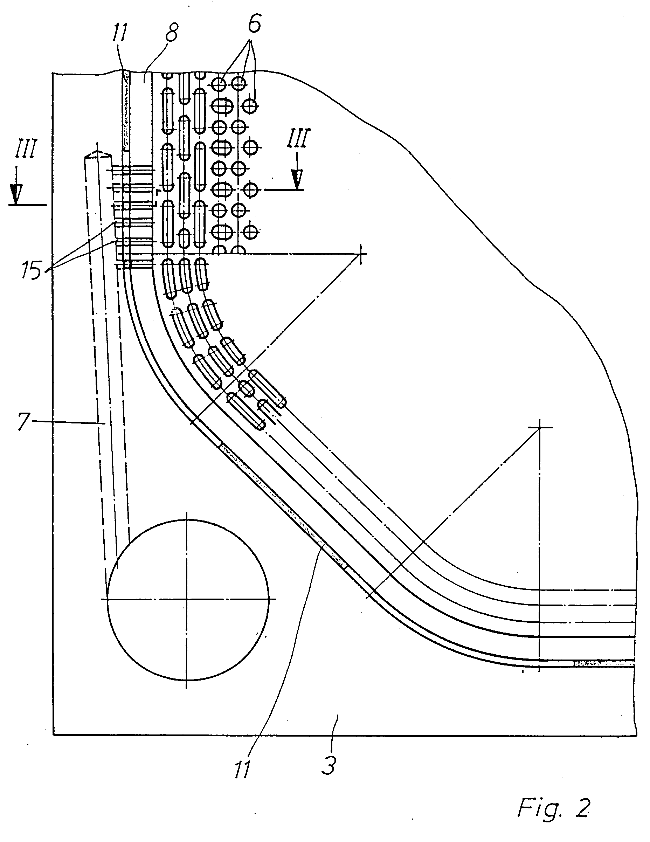

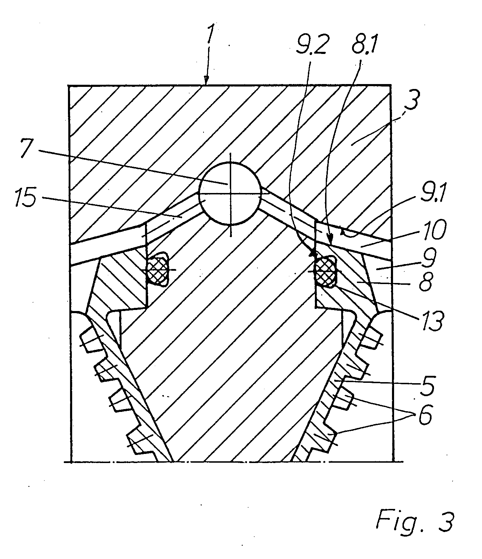

Um einen freien Abfluß des Filtrats durch die zum Filtratauslauf 7 führenden Filtratbohrungen 15 zu ermöglichen, ist die Klemmleiste 11 im Bereich der Filtratbohrungen 15 unterbrochen, wie sich dies aus den Fig. 2 und 3 ergibt. Im übrigen schließen die Klemmleiste 11 und die Randleiste 8 bündig mit dem Plattenrahmen 3 ab, so daß jedenfalls bei aneinanderliegenden Membranfilterplatten 1 ein zusätzlicher Halt der Klemmleiste 11 und der Randleiste 8 gegeben ist.

## Patentansprüche

1. Membranfilterplatte für eine Filterpresse, bei der mehrere solcher randseitig zusammengespannten, eine Stützwand (2) mit einem umlaufenden Plattenrahmen (3) aufweisenden Filterplatten (1) zwischen sich Filterkammern (4) mit darin mündenden Einläufen für die zu filtrierende Suspension bilden und ein- oder beidseitig eine mit der Filterplatte (1) randseitig dicht verbundene, im übrigen durch ein Druckmittel in die Filterkammer (4) vorbewegbare Membran (5) tragen, die auf ihrer der jeweiligen Filterkammer (4) zugekehrten Wandfläche mit einem Filtertuch belegte Profilvorsprünge (6) aufweist, welche unter dem Filtertuch ein an einen Filtratauslauf (7) angeschlossenes Rinnensystem für das Filtrat bilden, wobei die Membran (5) zum lösbaren Anschluß an der Filterplatte (1) mit einer im wesentlichen senkrecht zu ihrer Ebene vorstehenden Randleiste (8) versehen ist, die in eine an der Filterplatte (1) umfangsseitig angeordnete Aufnahmenut (9) greift, dadurch gekennzeichnet, daß die Randleiste (8) eine geringere Breite als die Aufnahmenut (9) aufweist und zwischen ihrer einen Seitenwand (8.1) und der Nutwand (9.1) einen Aufnahmespalt (10) für eine Klemmleiste (11) bildet, in den anschließend zur Befestigung der Randleiste in der Aufnahmenut die Klemmleiste eingeschoben ist.

2. Membranfilterplatte nach Anspruch 1, dadurch gekennzeichnet, daß die Aufnahmenut (9) sich zu ihrem Nutboden (9.2) hin verbreitert.

3. Membranfilterplatte nach Anspruch 1 oder 2, dadurch gekennzeichnet, daß der Aufnahmespalt (10) planparallele Seitenwände aufweist.

4. Membranfilterplatte nach einem der Ansprüche 1 bis 3, dadurch gekennzeichnet, daß der Aufnahmespalt (10) auf der dem Plattenrahmen (3) zugewandten Seite der Aufnahmenut (9) angeordnet ist.

5. Membranfilterplatte nach einem der Ansprüche 1 bis 4, dadurch gekennzeichnet, daß die Klemmleiste (11) an ihrer der Nutwand (9.1) anliegenden Seitenwand einen in eine Vertiefung in der Nutwand (9.1) vorstehenden Rastvorsprung (12) aufweist.

6. Membranfilterplatte nach einem der Ansprüche 1 bis 5, dadurch gekennzeichnet, daß im Boden (9.2) der Aufnahmenut (9) eine Dichtungsnut (13) zur Aufnahme eines Dichtmittels (14) vorgesehen ist.

7. Membranfilterplatte nach einem der Ansprüche 1 bis 5, dadurch gekennzeichnet, daß in der dem Boden (9.2) der Aufnahmenut (9) anliegenden Fläche der Randleiste (8) eine Dichtungsnut (13) zur Aufnahme eines Dichtmittels (14) vorgesehen ist.

8. Membranfilterplatte nach einem der Ansprüche 1 bis 7, dadurch gekennzeichnet, daS die Klemmleiste (11) im Bereich der Filtratbohrungen (15) unterbrochen ist.

9. Membranfilterplatte nach einem der Ansprüche 1 bis 8, dadurch gekennzeichnet, daß die Klemmleiste (11) und die Randleiste (8) bündig mit dem Plattenrahmen (3) abschließen.

## Claims

1. A diaphragm filter plate for a filter press in which a plurality of such filter plates (1) which are clamped together at their edges and which have a support wall (2) with a peripherally extending plate frame (3) form between them filter chambers (4) with inlets opening therein for the suspension to be filtered and at one or both sides carry a diaphragm (5) which is sealingly connected to the filter plate (1) at the edge and which in other respects can be advanced by a pressure medium into the filter chamber (4) and which on its wall surface towards the respective filter chamber (4) has profile projections (6) which are covered with a filter cloth and which under the filter cloth form a channel system for the filtrate, which is connected to a filtrate discharge (7), wherein for releasable connection to the filter plate (1) the diaphragm (5) is provided with an edge strip (8) which projects substantially perpendicularly to the plane of the diaphragm and which engages into a receiving groove (9) arranged on the filter plate (1) at the peripheral side, characterised in that the edge strip (8) is smaller in width than the receiving groove (9) and forms between its one side wall (8.1) and the groove wall (9.1) a receiving gap (10) for a clamping strip (11), into which receiving gap the clamping strip is then inserted for fixing the edge strip in the receiving groove.

2. A diaphragm filter plate according to claim 1 characterised in that the receiving groove (9) increases in width towards its groove bottom (9.2).

3. A diaphragm filter plate according to claim 1 or claim 2 characterized in that the receiving gap (10) has plane-parallel side walls.

4. A diaphragm filter plate according to one of claims 1 to 3 characterised in that the receiving gap (10) is arranged on the side of the receiving groove (9), which is towards the plate frame (3).

5. A diaphragm filter plate according to one of claims 1 to 4 characterized in that the clamping strip (11), at its side wall which bears against the groove wall (9.1), has a retaining projection (12) that projects into a recess in the groove wall (9.1).

6. A diaphragm filter plate according to one of claims 1 to 5 characterized in that a sealing groove (13) for receiving a sealing means (14) is provided in the bottom (9.2) of the receiving groove (9).

7. A diaphragm filter plate according to one of claims 1 to 5 characterized in that a sealing groove (13) for receiving a sealing means (14) is provided in the surface of the edge strip (8), which bears against the bottom (9.2) of the receiving groove (9).

8. A diaphragm filter plate according to one of claims 1 to 7 characterized in that the clamping strip (11) is interrupted in the region of the filtrate bores (15).

9. A diaphragm filter plate according to one of claims 1 to 8 characterised in that the clamping strip (11) and the edge strip (8) terminate flush with the plate frame (3).

## Revendications

1. Plaque filtrante à membrane pour un filtre-presse, dans lequel plusieurs plaques filtrantes (1) de ce type, qui sont réunies par serrage au niveau de leurs bords et comportent une paroi de support (2) possédant un cadre périphérique (3) forment entre elles des chambres de filtre (4) comportant des entrées qui débouchent dans ces chambres pour la suspension à filtrer, et portent, d'un côté ou des deux côtés, une membrane (5) qui est reliée étroitement au niveau de son bord, à la plaque filtrante (1) et peut être repoussée par ailleurs par un moyen de pression dans la chambre de filtre (4) et qui possède sur sa surface de paroi, tournée vers la chambre de filtre respective (4), des parties saillantes profilées (6), qui sont garnies d'un tissu filtrant et qui forment pour le filtrat, au-dessous du tissu filtrant, un système de gouttière se raccordant à une sortie (7) pour le filtrat, la membrane (5) étant pourvue, pour son raccordement amovible à la plaque filtrante (1), d'une barrette marginale (8) qui fait saillie essentiellement perpendiculairement au plan de la plaque et s'engage dans une rainure de logement (9), qui est disposée sur la périphérie de la plaque filtrante (1), caractérisée en ce que la barrette marginale (8) possède une largeur inférieure à celle de la rainure de logement (9) et forme, entre l'une de ses parois latérales (8.1) et la paroi (9.1) de la rainure, une fente de logement (10) pour une barrette de serrage (11), dans laquelle la barrette de serrage est insérée ensuite pour la fixation de la barrette marginale dans la rainure de logement.

2. Plaque filtrante à membrane selon la revendication 1, caractérisée en ce que la rainure de logement (9) s'élargit en direction de son fond (9.2).

3. Plaque filtrante à membrane selon la revendication 1 ou 2, caractérisée en ce que la fente de logement (10) possède des parois latérales planes parallèles.

4. Plaque filtrante à membrane selon l'une des revendications 1 à 3, caractérisée en ce que la fente de logement (10) est disposée sur le côté de la rainure de logement (9), qui est tourné vers le cadre (3) de la plaque.

5. Plaque filtrante à membrane selon l'une des revendications 1 à 4, caractérisée en ce que la barrette de serrage (11) comporte, au niveau de sa paroi latérale s'appliquant contre la paroi (9.1) de la rainure, un appendice saillant d'encliquetage (12) qui s'engage dans un renfoncement formé dans la paroi (9.1) de la rainure.

6. Plaque filtrante à membrane selon l'une des revendications 1 à 5, caractérisée en ce qu'une rainure d'étanchéité (13) servant à recevoir un organe d'étanchéité (14) est prévue dans le fond (9.2) de la rainure de logement (9).

7. Plaque filtrante à membrane selon l'une des revendications 1 à 5, caractérisée en ce qu'une rainure d'étanchéité (13) servant à loger un organe d'étanchéité (14) est prévu dans la surface, qui s'applique contre le fond (9.2) de la rainure de logement (9), de la barrette marginale (8).

8. Plaque filtrante à membrane selon l'une des revendications 1 à 7, caractérisée en ce que la barrette de serrage (11) est interrompue dans la zone des perçages (15) de passage du filtrat.

9. Plaque filtrante à membrane selon l'une quelconque des revendications 1 à 8, caractérisée en ce que la barrette de serrage (11) et la barrette marginale (8) se terminent de niveau avec le cadre (3) de la plaque.
